# EUROPÄISCHE PATENTSCHRIFT

(11) **EP 1 180 650 B1**
(45) Veröffentlichungstag und Bekanntmachung des Hinweises auf die Patenterteilung: **12.03.2003**
(21) Anmeldenummer: 01119393.5
(22) Anmeldetag: 11.08.2001
(51) Int. Cl.: F25B 35/04

(54) **Adsorber-/Desorber-Wärmetauscher**
Adsorber /desorber heat exchanger
Echangeur de chaleur pour adsorbeur et/ou désorbeur

(30) Priorität: 18.08.2000 AT 14292000
(43) Veröffentlichungstag der Anmeldung: 20.02.2002
(73) Patentinhaber: Vaillant GmbH, 42859 Remscheid (DE)
(72) Erfinder: Lang, Rainer, Dr., 51067 Köln (DE); Kehl, Reinhold, 42929 Wermelskirchen (DE); Marth, Frank, 56581 Melsbach (DE); Marx, Uwe, 51375 Leverkusen (DE); Wienen, Johann, 46359 Heiden (DE)
(74) Vertreter: Hocker, Thomas

(56) Entgegenhaltungen:
- DE-A- 4 405 669
- DE-A- 10 024 793
- DE-C- 668 098
- US-A- 4 996 029
- US-A- 5 441 716
- PATENT ABSTRACTS OF JAPAN vol. 011, no. 339 (M-639), 6. November 1987 (1987-11-06) & JP 62 119393 A (SANYO ELECTRIC CO LTD), 30. Mai 1987 (1987-05-30)

## Beschreibung

Die Erfindung bezieht sich auf einen Adsorber-/Desorber-Wärmetauscher mit einem von Granalien umgebenen von einem wärmeaufnehmenden Medium durchströmbaren Rohr, welches mit Längsrippen versehen ist. Ein derartiger wärmetauscher ist nach der JP-A- 62 119 393 bekannt.

Bei bekannten derartigen Adsorber-/Desorber-Wärmetauschern ist das Rohr in Granalien eingebettet.

Bei solchen Wärmetauschern ergibt sich der Nachteil, daß aufgrund der schlechten Wärmeleitfähigkeit des Adsorbens und des hohen Diffusionswiderstandes innerhalb der Schüttung der Sorptionsprozeß nur sehr langsam und daher uneffektiv abläuft.

Ziel der Erfindung ist es, diesen Nachteil zu vermeiden und einen Adsober-/Desorber-Wärmetauscher der eingangs erwähnten Art vorzuschlagen, bei dem ein rascher Ablauf des Sorptionsprozeßes sichergestellt ist.

Erfindungsgemäß wird dies bei einem Wärmetauscher der eingangs erwähnten Art durch die Merkmale des Anspruches 1 erreicht.

Durch die vorgeschlagenen Maßnahmen wird erreicht, daß einerseits die Wärmetauschfläche des Rohres vergrößert wird und zwischen den einzelnen Rippen nur eine einlagige Schüttung möglich ist. Dadurch kann der Sorptionsprozeß trotz der schlechten Wärmeleitfähigkeit und trotz des großen Diffusionswiderstandes des Adsorbens schnell und effektiv ablaufen. Dabei liegt eine große Stoffaustauschfläche für die Adsorption und Desorption des Adsorbats, z.B. Wasser, vor und die Wärme kann durch den direkten Kontakt der einzelnen Granalien zur Rippe schnell mit dem Wärmeträger, der im Rohr strömt, ausgetauscht werden.

Durch die vorgeschlagenen Maßnahmen ist auch eine sehr einfache Herstellung eines Wärmetauschers möglich, da die Rohre als Strangpreßprofile hergestellt werden können. Zur Herstellung eines erfindungsgemäßen Wärmetauschers genügt es, die Räume zwischen den Längsrippen des Rohres mit Granalien zu füllen.

Durch die vorgeschlagenen Maßnahmen wird auch eine hohe Wärmeziffer der Sorptionswärmepumpe bei gleichzeitig guter Leistungsdichte erreicht.

In diesem Zusammenhang ist es vorteilhaft die Merkmale des Anspruches 2 vorzusehen.

Durch die Merkmale des Anspruches 3 wird auf einfache Weise sichergestellt, daß die Granalien nicht verloren gehen können.

In dieser Hinsicht können auch die Merkmale des Anspruches 4 vorgesehen sein.

Um in den Zwischenräumen zwischen den einzelnen Längsrippen möglichst viele Granalien unterbringen zu können, ist es zweckmäßig, die Merkmale des Anspruches 5 vorzusehen.

Durch die Merkmale des Anspruches 6 ergibt sich der Vorteil eines verbesserten Wärmeüberganges zwischen dem das Rohr durchströmenden Medium und den Granalien.

Durch die Merkmale des Anspruches 7 kann das Rohr mit einer größeren Menge an Granalien beladen werden, wobei sichergestellt ist, daß die einzelnen Körner mit zumindest einer Längsrippe des Rohres in Berührung kommen.

Die Erfindung wird nun anhand der Zeichnung näher erläutert. Dabei zeigen:
Fig. 1 bis 3 verschiedene Querschnitte von Rohrprofilen für einen erfindungsgemäßen Wärmetauscher und
Fig. 4 ein Detail des Querschnittes nach der Fig. 3 in vergrößertem Maßstab.

Gleiche Bezugszeichen bedeuten In allen Figuren gleiche Einzelteile.

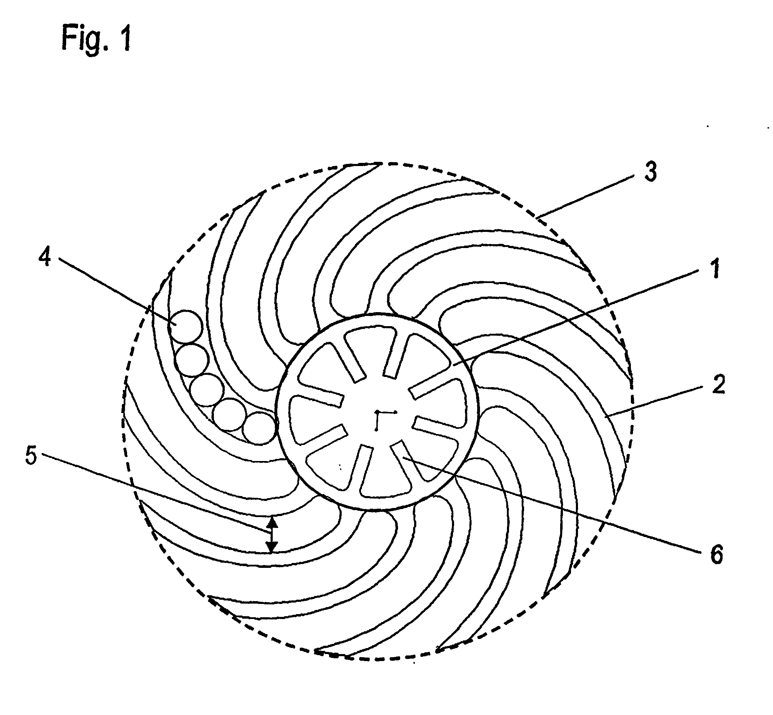

Bei der Ausführungsform nach der Fig. 1 weist das Rohr 1 radial nach innen gerichtete Längsrippen 6 auf.

An der Außenseite des Rohres 1 sind ebenfalls Längsrippen 2 angeformt, die sich im Querschnitt im wesentlichen spiralförmig radial nach außen erstrecken.

Zwischen benachbarten Längsrippen 2 sind Granalien 4, z.B. Zeolith-Granulat gehalten.

Dabei übersteigt der lichte Abstand 5 in Umfangsrichtung des Rohres 1 zwischen zwei benachbarten Längsrippen 2 die Korngröße der Granalien 4 nur wenig, so daß sich zwischen zwei benachbarten Längsrippen 2 eine einlagige Schüttung ergibt.

Um ein Herausfallen der Granalien 4 zu vermeiden, ist das Rohr 2 von einem zylindrischen Netz 3 umgeben, das an den radial außen liegenden freien Enden der Rippen 2 anliegt und vorzugsweise aus Aluminium hergestellt ist.

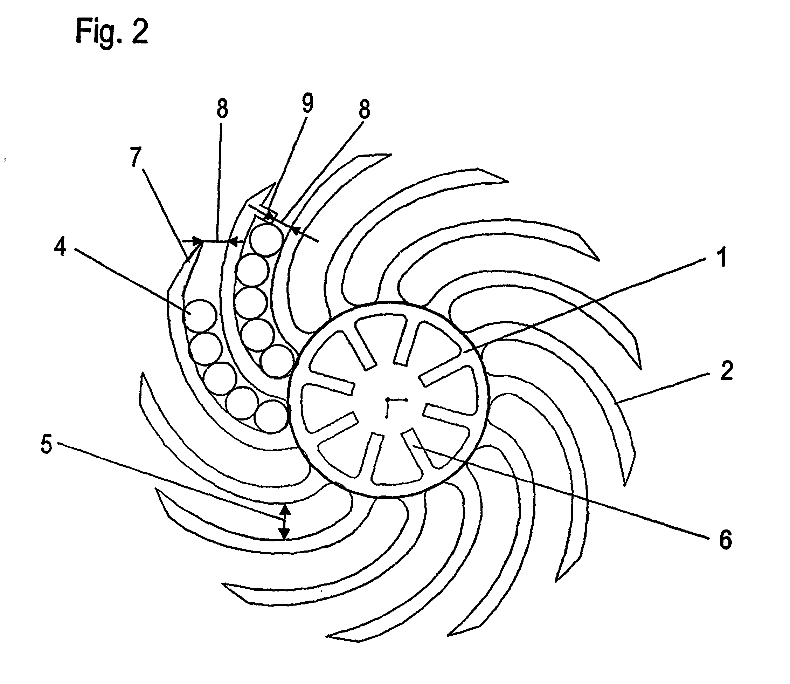

Die Ausführungsform nach der Fig. 2 unterscheidet sich von jener nach der Fig. 1 daß in den radial außen liegenden Endbereichen der Längsrippen 2 Ansätze 7, an diesen angeformt sind, die gegen eine benachbarte Längsrippe 2 gerichtet sind und den lichten Querschnitt zwischen diesen Längsrippen 2 auf ein Maß begrenzen, das den Durchtritt eines Korns der Granalien 4 verhindert.

Dabei können die Ansätze, wie z.B. die Ansätze 7, abgewinkelt und stärker gegen die benachbarte Längsrippe 2 geneigt sein, wodurch sich der lichte Abstand 8 im radial äußersten Bereich der Längsrippen 2 auf einen Wert verringert, der kleiner als die Korngröße der Granalien 4 ist und somit ein Herausgleiten der einzelnen Körner der Granalien 4 verhindert ist.

Weiter können die Ansätze, wie z.B. die Ansätze 9 im wesentlichen senkrecht zur Tangente an dem Fußpunkt des Ansatzes 9 an der Längsrippe 2 von dieser abstehen und gegen die benachbarte Längsrippe 2 gerichtet sein. Dabei ist der lichte Abstand 8 zwischen dem freien Ende des Ansatzes 9 und der benachbarten Längsripppe 2 kleiner als die Komgröße der Granalien 4, wobei der Normalabstand 5 zwischen den übrigen Bereichen der Längsrippen 2 die Korngröße der Granalien 4 geringfügig übersteigt, wie dies auch bei der Ausführung gemäß der Fig. 1 der Fall ist.

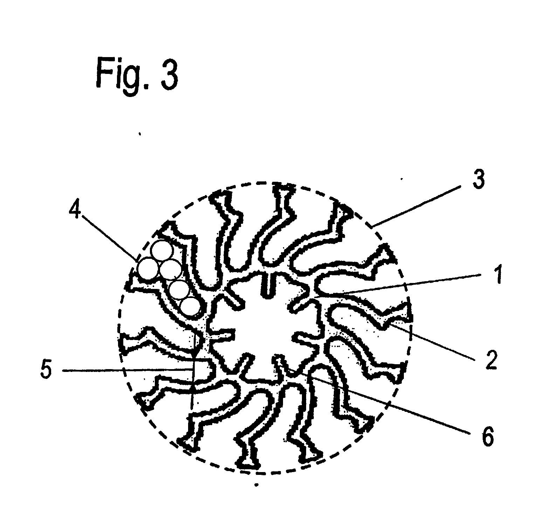

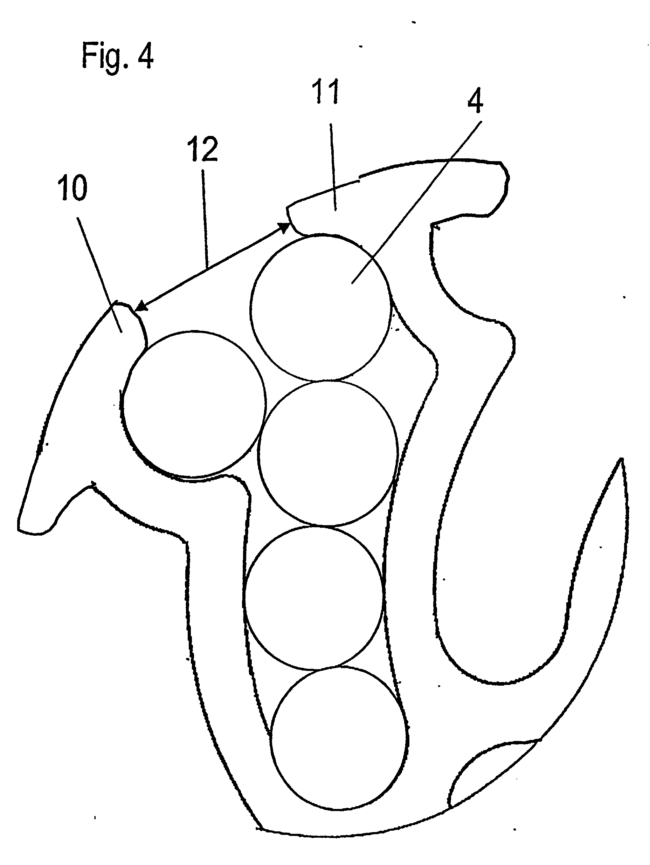

Bei der Ausführungsform nach der Fig. 3 und 4 sind zwar ebenfalls gegen die jeweils benachbarten Längsrippen 2 gerichtete Ansätze 10, bzw. 11 vorgesehen, die an den äußersten Endbereichen der Längsrippen 2 angeformt sind. Allerdings ist der lichte Abstand zwischen benachbarten Längsrippen 2 im radial äußeren Bereich der Längsrippen im wesentlichen sprungartig auf einen Wert erhöht, der die doppelte Korngröße der Granalien 4 geringfügig übersteigt.

Der lichte Abstand 12 zwischen den gegeneinander gerichteten Ansätzen 10 und 11 zweier benachbarten Längsrippen 2 ist dabei kleiner als die doppelte Korngröße der Granalien 4.

In den radial innen liegenden Bereichen gleicht die Ausführungsform nach den Fig. 3 und 4 jenen nach den Fig. 1 und 2, d.h. daß in den inneren Bereichen der lichte Abstand 5 zwischen den benachbarten Längsrippen 2 nur geringfügig größer als die Korngröße der Granalien 4 ist.

Bei den Ausführungsformen nach den Fig. 2 bis 4 kann ein die radial äußeren Enden der Längsrippen 2 umgebendes Netz 3 entfallen, da durch die Ansätze 7, 9 10, 11, ein Herausfallen der Körner der Granalien, die vorzugsweise aus Zeolith bestehen, verhindert ist.

Da zwischen den größten Bereichen der Längsrippen 2 die Granalien 4 lediglich in einer einlagigen Schüttung eingebracht sind, ist ein sehr guter Wärmeübergang von den Längsrippen 2 zu den Granalien 4 gegeben. Damit ist aber auch ein guter Wärmeübergang von dem das Rohr 1 durchströmenden Medium über das Rohr 1 und dessen nach innen gerichteten Rippen 6 zu den Granalien gewährleistet.

Die Rohre 1 nach den Fig. 1 bis 4 können als Strangpreßprofile hergestellt werden, wodurch sich ein nur geringer Herstellungsaufwand für einen erfindungsgemäßen Wärmetauscher ergibt. So ist zu dessen Herstellung lediglich das Rohr 1 entsprechend abzulängen und die Zwischenräume zwischen den Längsrippen 2 mit Granalien 4 zu füllen.

## Patentansprüche

1. Adsorber-/Desorber-Wärmetauscher mit einem von Granalien (4) umgebenen von einem wärmeaufnehmenden Medium durchströmbaren Rohr (1), welches mit Längsrippen (2) versehen ist, die einen Abstand in Umfangsrichtung des Rohres (1) voneinander aufweisen, der die Komgröße der Granalien (4), z. B. eines Zeolithen, nur wenig übersteigt und dabei kleiner als die doppelte Korngröße der Granalien ist, wobei der Raum zwischen den Längsrippen (2) mit einer annähernd einlagigen Schüttung der Granalien (4) ausgefüllt ist.

2. Wärmetauscher nach Anspruch 1, **dadurch gekennzeichnet, daß** die Höhe der Längsrippen (2) in einer Linie senkrecht zur Längsachse des Rohres (1) dem drei- bis achtfachen der Korngröße der Granalien entspricht.

3. Wärmetauscher nach Anspruch 1 oder 2, **dadurch gekennzeichnet, daß** über die freien radialen Enden der Längsrippen (2) ein Netz (3) gespannt ist.

4. Wärmetauscher nach Anspruch 1 oder 2, **dadurch gekennzeichnet, daß** in den radialen Endbereichen der Längsrippen (2) Ansätze (7, 9, 10, 11) an diese angeformt sind, die gegen eine benachbarte Längsrippe (2) gerichtet sind.

5. Wärmetauscher nach einem der Ansprüche 1 bis 4, **dadurch gekennzeichnet, daß** die Längsrippen (2) im Querschnitt im wesentlichen spiralförmig verlaufen.

6. Wärmetauscher nach einem der Ansprüche 1 bis 5, **dadurch gekennzeichnet, daß** an der Innenwand des Rohres (1) sich radial gegen dessen Zentrum zu erstreckende Längsrippen (6) angeformt sind.

7. Wärmetauscher nach einem der Ansprüche 1 bis 6, **dadurch gekennzeichnet, daß** sich der Abstand in Umfangsrichtung zwischen benachbarten Längsrippen (2) in deren radial äußeren Bereich, vorzugsweise sprunghaft, auf einen Wert erhöht, der das Doppelte der Korngröße geringfügig übersteigt.

## Claims

1. An absorber/desorber heat exchanger having a tube (1) surrounded by granulated metal (4), through which a heat absorbing medium can flow and which is provided with longitudinal fins (2) arranged at a mutual distance in the circumferential direction of the tube (1) which is only slightly greater than the grain size of the granulated metal (4), e.g. a zeolite, and is smaller than double the grain size of such granulated metal, with the space between the longitudinal fins (2) thus being filled with merely a single layer of the granulated metal (4).

2. A heat exchanger as claimed in Claim 1 **characterised in that** the height of the longitudinal fins (2) along a line perpendicular to the longitudinal axis of the tube (1) corresponds to a value three to eight times the grain size of the granulated metal.

3. A heat exchanger as claimed in Claim 1 or 2 **characterised in that** a net (3) is placed over the free radial ends of the longitudinal fins (2).

4. A heat exchanger as claimed in Claim 1 or 2 **characterised in that** the longitudinal fins (2) in their radial end ranges incorporate projections (7, 9. 10, 11) extending in a direction against a neighbouring longitudinal fin (2).

5. A heat exchanger as claimed in any of Claims 1 to 4 **characterised in that** the longitudinal fins (2) are of essentially spiral configuration cross-sectionally.

6. A heat exchanger as claimed in any of Claims 1 to 5 **characterised in that** longitudinal fins (6) are provided on the interior wall of the tube (1), which extend radially inward towards the centre of the tube.

7. A heat exchanger as claimed in any of Claims 1 to 6 **characterised in that** the circumferential distance between neighbouring longitudinal fins (2) in the radially outer range of the latter abruptly increases to a value which slightly exceeds double the grain size of the granulated metal.

## Revendications

1. Echangeur de chaleur adsorbant/désorbant avec un tube (1) enveloppé de grenailles (4) et permettant la circulation d'un milieu absorbant la chaleur, tube muni de nervures longitudinales (2) dont la distance entre elles suivant le pourtour du tube (1) dépasse légèrement la taille des grenailles (4), p.ex. d'un zéolithe, et est inférieure à la taille double des grenailles, l'espace entre les nervures (2) étant rempli d'une simple couche de grenailles (4).

2. Echangeur de chaleur suivant la revendication 1, **caractérisé par le fait que** la hauteur des nervures (2) suivant une droite perpendiculaire à l'axe longitudinal du tube (1) correspond au triple jusqu'à huit fois la taille des grenailles.

3. Echangeur de chaleur suivant la revendication 1 ou 2, **caractérisé par le fait qu'**un filet (3) est tendu sur les extrémités libres radiales des nervures (2).

4. Echangeur de chaleur suivant la revendication 1 ou 2, **caractérisé par le fait que** les bouts radiaux des nervures (2) comportent des parties (7, 9, 10, 11) regardant une nervure (2) voisine.

5. Echangeur de chaleur suivant l'une des revendications 1 à 4, **caractérisé par le fait que** les nervures (2), en coupe, sont conçues essentiellement en spirale.

6. Echangeur de chaleur suivant l'une des revendications 1 à 5, **caractérisé par le fait que** des nervures longitudinales (6) orientées sur le centre du tube (1) font corps avec la paroi intérieure dudit tube.

7. Echangeur de chaleur suivant l'une des revendications 1 à 6, **caractérisé par le fait que** la distance entre des nervures (2) voisines sur le pourtour du tube atteint, dans leur partie extérieure radiale, de préférence subitement, une valeur qui dépasse un peu le double de la taille des grenailles.
